# NEUE EUROPÄISCHE PATENTSCHRIFT

(11) **EP 2 485 374 B2**
(45) Veröffentlichungstag und Bekanntmachung des Hinweises auf die Entscheidung über den Einspruch: **01.03.2017**
(45) Hinweis auf die Patenterteilung: 31.07.2013
(21) Anmeldenummer: 11153363.4
(22) Anmeldetag: 04.02.2011
(51) Int. Cl.: H02K 29/08

(54) **Elektrischer Kleinstmotor**
Miniature electric motor
Moteur électrique miniature

(43) Veröffentlichungstag der Anmeldung: 08.08.2012
(73) Patentinhaber: Dr. Fritz Faulhaber GmbH & Co. KG, 71101 Schönaich (DE)
(72) Erfinder: Wallner, Herbert, 71101 Schönaich (DE)
(74) Vertreter: Patent- und Rechtsanwälte Dr. Solf & Zapf

(56) Entgegenhaltungen:
- EP-A2- 1 182 461
- DE-A1- 2 915 461
- DE-A1- 10 122 277
- DE-A1- 19 916 958
- DE-A1-102010 003 475
- JP-A- 2001 275 310
- JP-A- 2003 319 631
- JP-A- 2010 183 797

## Beschreibung

Die vorliegende Erfindung betrifft einen elektrischen Kleinstmotor mit einem Außendurchmesser kleiner/gleich 6 mm gemäß dem Oberbegriff des Anspruchs 1.

Bei solchen Kleinstmotoren handelt es sich um bürstenlose Gleichstrom-Motoren, häufig auch abgekürzt BLDC-Motoren genannt (BLDC = brushless direct current). Wegen der sehr kleinen Baugröße mit einem Außendurchmesser von nur maximal 6 mm erfolgt die für die Kommutierungssteuerung erforderliche Erfassung der Rotor-Drehstellung üblicherweise sensorlos, und zwar anhand einer Erfassung und Auswertung der EMK, d. h. einer in den Statorwicklungen bei Rotation rückinduzierten Spannung. Dadurch ist es bei solchen Kleinstmotoren nicht möglich, eine Ansteuerung für geringe Drehzahlen oder gar eine Drehpositionsregelung zu realisieren.

Bei größeren Motoren mit einem Durchmesser über 6 mm können dagegen Sensoren, insbesondere digitale Hall-Sensoren, verwendet werden, weil die größere Bauform eine Unterbringung der Sensoren erlaubt. So können beispielsweise Sensoren exzentrisch um den Umfang verteilt mit bestimmten Umfangswinkelabständen angeordnet sein, wobei aber eine genaue Positionsausrichtung der einzelnen Sensoren erforderlich ist.

Die EP 0 920 113 B1 beschreibt einen bürstenlosen Gleichstrom-Motor mit einem exzentrisch radial neben dem Rotor angeordneten Sensor, wobei zudem der Rotor eine spezielle, permanentmagnetisierte Messmagnetisierungszone aufweist.

Auch die DE 10 2007 000 440 A1 offenbart eine Drehwinkelerfassungseinrichtung, die exzentrisch, radial neben dem Rotor positioniert ist.

Gemäß EP 0 510 336 B1 wird das magnetische Streufeld des Motormagneten benutzt, jedoch soll nur die Drehrichtung, nicht die Winkellage erfasst werden.

Die US 2010/0090633 A1 beschreibt die Verwendung eines Hall-Sensors, der aber das Magnetfeld eines zusätzlichen, über die Motorwelle gemeinsam mit dem Rotor rotierenden, zweipolig magnetisierten Gebermagneten erfasst.

Ähnliches gilt auch für eine Motor-Steuerung gemäß EP 2 117 103 B1.

Schließlich werden auch gemäß EP 1 456 935 B1 einzelne Sensoren zur Erfassung des Rotor-Magnetfeldes verwendet.

Alle diese bekannten Ausführungen eignen sich nicht für einen Kleinstmotor der hier behandelten, gattungsgemäßen Art, und zwar wegen der äußerst kleinen Bauform mit einem Außendurchmesser, der jedenfalls kleiner/gleich 6 mm sein soll.

Der vorliegenden Erfindung liegt die Aufgabe zu Grunde, einen Kleinstmotor der beschriebenen, gattungsgemäßen Art zu schaffen, bei dem unter Beibehaltung seiner kleinen, kompakten Bauform eine verbesserte Ansteuerung, insbesondere auch für eine Drehpositionsregelung und/oder für geringe Drehzahlen, erreicht wird.

Erfindungsgemäß wird diese Aufgabe mit den Merkmalen des unabhängigen Anspruchs 1 gelöst. Vorteilhafte Ausgestaltungen der Erfindung sind in den abhängigen Ansprüchen und in der anschließenden Beschreibung enthalten. Erfindungsgemäß ist demnach vorgesehen, dass zur Erfassung der Drehstellung des Magnetrotors ein - mindestens einen Magnetfeldsensor enthaltender - Sensorchip derart in einem sich axial an eine Stirnseite des Magnetrotors anschließenden Bereich in einer zur Drehachse senkrechten Ebene liegend angeordnet ist, dass der Magnetfeldsensor von dem Magnetfeld des Magnetrotors so beaufschlagt wird, dass das Magnetfeld zur Feststellung der Rotor-Drehstellung auswertbar ist. Somit ist durch die Erfindung vorteilhafterweise ohne zusätzliche Geberelemente unmittelbar das Magnetfeld, d. h. das Streufeld, des Magnetrotors erfassbar und zur Feststellung der Drehstellung des Magnetrotors auswertbar. Der Sensorchip enthält mindestens drei, bevorzugt aber vier, einzelne Magnetfeldsensoren, insbesondere Hall-Sensoren, in einem Bauteil integriert. Dadurch ist die Positionierung und Ausrichtung der Magnetfeldsensoren relativ zu dem Magnetrotor auch innerhalb des sehr kleinen Motors sehr exakt möglich; es braucht nur der einheitliche Sensorchip relativ zu dem Magnetrotor am Stator mechanisch positioniert zu werden.

Der Sensorchip ist mit einer sehr flachen Bauform als Single-Chip-Encoder ausgebildet, der als IC-Baustein zusätzlich zu den Magnetfeldsensoren eine derartige Signalauswertung enthält, dass er unmittelbar ein absolutes und/oder inkrementelles Drehstellungssignal für eine externe Steuerelektronik liefert. Dadurch kann die Steuerelektronik zusätzlich zur eigentlichen Kommutierung auch zur exakten Regelung der Rotor-Position und/oder auch zur Einstellung geringer Rotor-Drehzahlen ausgelegt sein. Dabei kann die Ansteuerung den Motor aus dem Stillstand heraus und über den gesamten Drehzahlbereich hinweg optimal kommutieren, was durch eine Synchronsteuerung oder mit einer sensorlosen Steuerung unter Nutzung der in den Statorwicklungen rückinduzierten EMK-Spannung nicht möglich wäre. Die Ansteuerung des Motors kann wegen der zur Verfügung stehenden Ausgangssignale des Single-Chip-Encoders sogar mit Sinuskommutierung erfolgen, was bisher bei derart kleinen Motoren nicht möglich war.

Die in dem Sensorchip integriert enthaltenen Magnetfeldsensoren sind in einem die axiale Projektion des Magnetrotors überdeckenden Bereich und in einer bestimmten Umfangsverteilung auf einem Teilkreis um die verlängerte Drehachse angeordnet, wobei der Teilkreis einen Durchmesser aufweist, der im Bereich zwischen dem Durchmesser der Rotorwelle, entsprechend dem Innendurchmesser des Magnetrotors, und dem Außendurchmesser des Magnetrotors liegt. Besonders vorteilhaft ist es, wenn der Durchmesser des Teilkreises, auf dem die Magnetfeldsensoren angeordnet sind, innerhalb der äußeren Hälfte des Ringquerschnitts des Magnetrotors liegt. Der Sensorchip ist von der benachbarten Stirnseite des Magnetrotors über einen axialen Abstand beabstandet, der maximal dem 1- bis 1,5-fachen Durchmesser des Teilkreises der Magnetfeldsensoren entspricht. Es hat sich gezeigt, dass durch diese beschriebene Ausgestaltung und Anordnung des Sensorchips eine sichere Erfassung der Rotor-Drehstellung allein anhand des Rotor-Magnetfeldes und somit ohne zusätzliche Geberelemente, wie insbesondere separate Gebermagnete, möglich ist.

Anhand eines in der Zeichnung veranschaulichten, bevorzugten Ausführungsbeispiels sollen die Erfindung und besondere Ausgestaltungen genauer erläutert werden. Es zeigen:
- Fig. 1: eine stark vergrößerte Axialschnittdarstellung des erfindungsgemäßen, mit einem Sensorchip ausgestatteten Kleinstmotors,
- Fig. 2: eine Draufsicht einer bevorzugt dem Sensorchip zugeordneten flexiblen Leiterfolie,
- Fig. 3: eine Seitenansicht der Leiterfolie in Pfeilrichtung III gemäß Fig. 2,
- Fig. 4: eine gesonderte, nochmals vergrößerte Darstellung eines Lagerschildes im Axialschnitt entsprechend Fig. 1,
- Fig. 5: eine gesonderte Darstellung eines Aufnahmeteils zur Aufnahme und Positionierung des Sensorchips in einer vergrößerten Schnittansicht entsprechend Fig. 1,
- Fig. 6: eine Ansicht des Aufnahmeteils in Pfeilrichtung VI gemäß Fig. 5,
- Fig. 7: eine Ansicht des Aufnahmeteils auf die gegenüberliegende Seite in Pfeilrichtung VII gemäß Fig. 5 und
- Fig. 8: eine sehr stark vergrößerte, prinzipielle Axial-Ansicht des erfindungsgemäßen Kleinstmotors zur Erläuterung der Anordnung und Ausgestaltung des Sensorchips relativ zu dem Magnetrotor.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf das Ausführungsbeispiel und dabei nicht auf alle oder mehrere Merkmale von beschriebenen Merkmalskombinationen beschränkt ist, vielmehr kann jedes einzelne Teilmerkmal des Ausführungsbeispiels auch losgelöst von allen anderen im Zusammenhang damit beschriebenen Teilmerkmalen für sich eine erfinderische Bedeutung haben.

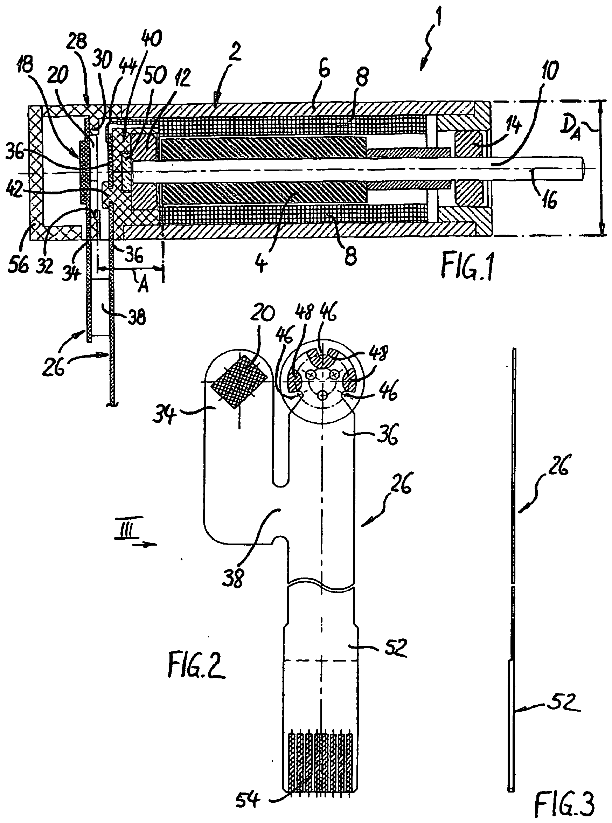

Wie sich zunächst aus Fig. 1 ergibt, besteht ein erfindungsgemäßer elektrischer Kleinstmotor 1 aus einem hohlzylindrischen Stator 2 und einem Permanent-Magnetrotor 4. Der Kleinstmotor 1 bzw. sein Stator 2 weist einen Außendurchmesser D_{A} auf, der kleiner/gleich 6 mm, insbesondere sogar kleiner/gleich 5 mm ist. Der Stator 2 weist ein äußeres, hohlzylindrisches Rückschlusselement 6 aus einem weichmagnetischen Werkstoff auf, einen so genannten Eisen-Rückschluss, und innerhalb des Rückschlusselementes 6 sind Statorwicklungen 8 untergebracht. Der zylindrische Magnetrotor 4 sitzt auf einer Rotorwelle 10, die ihrerseits in Drehlagern 12, 14 drehbar geführt ist, so dass über die Rotorwelle 10 der Magnetrotor 4 um eine Drehachse 16 drehbar innerhalb des Stators 2 angeordnet ist.

Der Kleinstmotor 1 ist mittels einer nicht dargestellten, bevorzugt extern, außerhalb des Motors befindlichen Steuerelektronik ansteuerbar, wobei diese Steuerelektronik zur bürstenlosen, elektronischen Kommutierung der Statorwicklungen 8 zum Erzeugen eines magnetischen Drehfeldes in Abhängigkeit von der Drehstellung des Magnetrotors 4 ausgelegt ist.

Erfindungsgemäß weist der Kleinstmotor 1 zur Erfassung der Rotor-Drehstellung einen einheitlichen Sensorchip 20 auf, der als IC-Bauelement mit einer sehr flachen, dünnen Bauform konzentrisch zur Drehachse 16 in einem sich axial an eine Stirnseite des Magnetrotors 4 anschließenden Bereich in einer zur Drehachse 16 senkrechten Ebene liegend angeordnet ist.

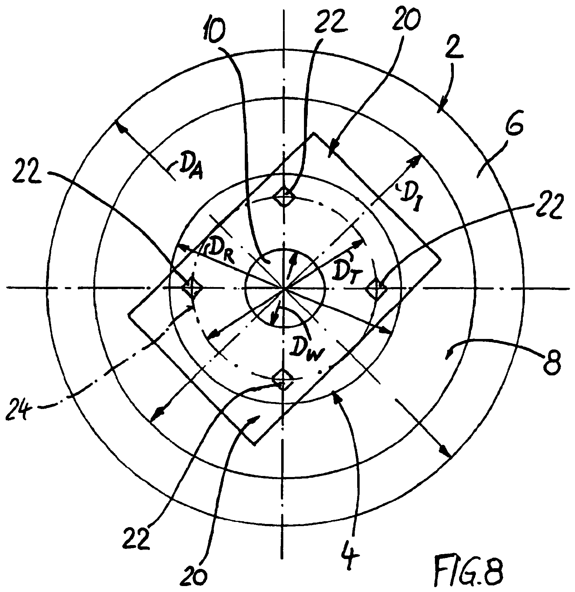

Wie sich insbesondere aus Fig. 8 ergibt, weist der Sensorchip 20 vorzugsweise vier integrierte Magnetfeldsensoren 22 auf, die insbesondere als Hall-Sensoren ausgeführt sind. Dabei sind alle Magnetfeldsensoren 22 gemäß Fig. 8 in einem die axiale Projektion des Magnetrotors 4 überdeckenden Bereich und in einer bestimmten, insbesondere radialsymmetrischen Umfangsverteilung auf einem Teilkreis 24 um die verlängerte Drehachse 16 bzw. die Rotorwelle 10 angeordnet. Der Teilkreis 24 weist einen Durchmesser D_{T} auf, der im Bereich zwischen dem Durchmesser D_{W} der Rotorwelle 10 - wobei dieser Durchmesser D_{W} dem Innendurchmesser des hohlzylindrischen Magnetrotors 4 entspricht - und dem Außendurchmesser D_{R} des Magnetrotors 4 liegt. In der bevorzugten, in Fig. 8 veranschaulichten Ausführung liegt der Teilkreis 24 mit seinem Durchmesser D_{T} innerhalb der äußeren Hälfte des Ringquerschnitts des Magnetrotors 4. Aufgrund der bevorzugt radialsymmetrischen Umfangsverteilung der bevorzugt vier Magnetfeldsensoren 22 sind diese voneinander in Umfangsrichtung um jeweils 90° beabstandet. Der Sensorchip 20 liegt durch seine geringe Baugröße innerhalb des von dem Rückschlusselement 6 umschlossenen Querschnitts.

Mit der beschriebenen Ausgestaltung und Anordnung kann der Sensorchip 20 mit seinen Magnetfeldsensoren 22 direkt das Magnetfeld, d. h. das Streufeld, des Magnetrotors 4 auswertbar erfassen, so dass auf zusätzliche Geberelemente, insbesondere gesonderte Gebermagnete, vorteilhafterweise verzichtet werden kann.

Der Sensorchip 20 ist mit den Magnetfeldsensoren 22 von der benachbarten Stirnseite des Magnetrotors 4 über einen axialen Abstand A beabstandet, der maximal dem 1- bis 1,5-fachen Durchmesser D_{T} des Teilkreises 24 der Magnetfeldsensoren 22 entspricht; siehe hierzu auch Fig. 1.

Der Sensorchip 20 ist als Single-Chip-Encoder ausgebildet, der als IC zusätzlich zu den integrierten Magnetfeldsensoren 22 eine derart ausgebildete Signalauswertung integriert enthält, dass er unmittelbar die aktuelle Drehwinkelstellung des Magnetrotors 4 erfasst und dazu ein absolutes und/oder inkrementelles Drehstellungssignal für die Steuerelektronik bereitstellt. Dazu besteht die integrierte Signalauswertung des Single-Chip-Encoders aus einer in den Zeichnungen nicht gesondert dargestellten Elektronik.

Wegen der sehr kleinen Baugröße des erfindungsgemäßen Kleinstmotors 1 ist es zudem vorteilhaft, den Sensorchip 20 in der an sich bekannten Flip-Chip-Technologie auszuführen. Dies bedeutet, dass der integrierte Schaltkreis in einer umgedrehten, gewendeten Anordnung auf der Oberseite eines Trägers befestigt ist, und zwar ohne zusätzliches Gehäuse. Zweckmäßig ist hierbei der Sensorchip 20 auf einer flexiblen Leiterfolie 26, einer so genannten "Flexboard", angeordnet und über Leiterbahnen elektrisch angeschlossen. Einige, insbesondere passive Bauelemente 18 zur Spannungsstabilisierung können gemäß Fig. 1 auf der dem Sensorchip 20 gegenüberliegenden Seite der Leiterfolie 26 angeordnet sein.

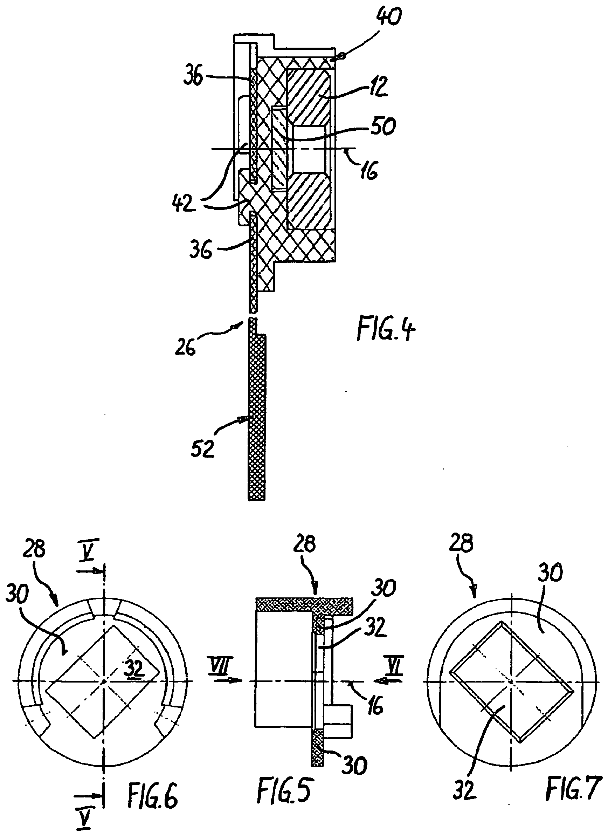

Der Sensorchip 20 ist relativ zu dem Stator 2 und dem Magnetrotor 4 mechanisch exakt zu positionieren, so dass durch diese Positionierung unmittelbar auch alle integrierten Magnetfeldsensoren 22 optimal positioniert sind; siehe Fig. 8. Für die mechanische Positionierung des Sensorchips 20 ist der Stator 2 einseitig mit einem flanschartigen Aufnahmeteil 28 verbunden, wozu auch auf die gesonderten Darstellungen in Fig. 5 bis 7 verwiesen wird. Das Aufnahmeteil 28 schließt sich gemäß Fig. 1 axial bündig unmittelbar oder - wie dargestellt - mittelbar an das Rückschlusselement 6 des Stators 2 an. Das Aufnahmeteil 28 weist eine zur Drehachse 16 senkrechte Wandung 30 mit einer Aufnahmeöffnung 32 auf, wobei die Aufnahmeöffnung 32 bezüglich ihrer Öffnungsform so an die Kontur des Sensorchips 20 angepasst ist, dass der Sensorchip 20 in die Aufnahmeöffnung 32 formschlüssig und dadurch spielfrei positioniert eingesetzt werden kann. Der Sensorchip 20 und die zugehörige Aufnahmeöffnung 32 weisen eine von der Kreisform abweichende Kontur auf, so dass der Sensorchip 20 auch bezüglich seiner Drehausrichtung exakt ausgerichtet wird. In der dargestellten, bevorzugten Ausführung weisen der Sensorchip 20 und die Aufnahmeöffnung 32 jeweils eine rechteckige Kontur auf.

Die den Sensorchip 20 tragende flexible Leiterfolie 26 ist in Fig. 2 und 3 gesondert dargestellt. Demnach weist die Leiterfolie 26 einen mit dem Sensorchip 20 verbundenen Chipträgerabschnitt 34 und einen elektrisch mit den Statorwicklungen 8 verbundenen Statorabschnitt 36 auf. Im montierten Zustand gemäß Fig. 1 sind der Chipträgerabschnitt 34 und der Statorabschnitt 36 in zwei axial parallel versetzten Ebenen angeordnet und über einen um 180° umgefalteten Verbindungsabschnitt 38 miteinander verbunden. Der Statorabschnitt 36 liegt näher am Stator 2 und am Magnetrotor 4 als der Chipträgerabschnitt 34.

Wie sich weiterhin aus Fig. 1 und auch aus der vergrößerten Ansicht in Fig. 4 ergibt, ist der Statorabschnitt 36 der Leiterfolie 26 an einem Lagerschild 40 des Stators 2 befestigt. Der Lagerschild 40 nimmt das Drehlager 12 auf, wobei der Lagerschild 40 so zwischen dem Stator 2 und dem Chip-Aufnahmeteil 28 sitzt, dass die Außenkontur des Stators 2 bzw. dessen Rückschlusselementes 6 bündig über den Lagerschild 40 in das Aufnahmeteil 28 übergeht. Die mechanische Verbindung zwischen dem Lagerschild 40 und dem Statorabschnitt 36 der Leiterfolie 26 erfolgt vorzugsweise über nietartige Haltelemente 42 des Lagerschildes 40, die durch Lochöffnungen des Statorabschnitts 36 der Leiterfolie 26 geführt und verstemmt, insbesondere warm verstemmt sind. Durch die mechanische Verbindung des Lagerschildes 40 mit dem Stator 2 können die Statorwicklungen 8 über Wicklungsanzapfungen 44 (siehe Fig. 1) elektrisch mit dem Statorabschnitt 36 der Leiterfolie 26 verbunden werden. Dazu werden die Wicklungsanzapfungen 44, d. h. Drahtenden der Statorwicklungen 8, durch randliche Ausnehmungen 46 der Leiterfolie 26 geführt und auf Kontaktzonen 48 aufgelötet (siehe Fig. 2).

Zu der Darstellung in Fig. 4 sei noch erwähnt, dass innerhalb des Lagerschildes 40 zwischen diesem und dem Drehlager 12 noch eine Anlaufscheibe 50 zur axialen Abstützung der Rotorwelle 10 angeordnet ist, vgl. auch Fig. 1.

Wie sich weiterhin aus Fig. 1 bis 3 ergibt, weist die flexible Leiterfolie 26 einen Anschlussabschnitt 52 zum externen elektrischen Motoranschluss auf, d. h. zur elektrischen Verbindung mit einer externen Steuerelektronik. Der Anschlussabschnitt 52 bildet vorzugsweise eine Verlängerung des Statorabschnitts 36 und liegt daher in der gleichen Ebene. Gemäß Fig. 2 hat die Leiterfolie 26 in ihrem flach liegenden, noch nicht montierten Zustand etwa eine Y-Form. Der Anschlussabschnitt 52 weist eine endseitige Verdickung mit Kontaktelementen 54 zum elektrischen Steckanschluss auf.

Aus der Darstellung in Fig. 1 und der zugehörigen Beschreibung ergibt sich, dass das Magnetfeld des Magnetrotors 4 mehrere Bauteile durchdringt, bis es in den Bereich des Sensorchips 20 gelangt. Überraschenderweise kann dennoch das Magnetfeld hinreichend genau erfasst werden, um eine exakte Bestimmung der Rotor-Drehstellung zu gewährleisten.

In diesem Zusammenhang ist es weiterhin vorteilhaft, wenn gemäß Fig. 1 der Magnetrotor 4 innerhalb des Stators 2 relativ zu den Statorwicklungen 8 in axialer Richtung außermittig in Richtung des Sensorchips 20 versetzt angeordnet ist. Dadurch wird eine Erhöhung der effektiven Signalstärke erreicht.

Im fertig montierten Zustand gemäß Fig. 1 wird der vom Stator 2 weg weisende Bereich des Aufnahmeteils 28 mit den dort optional angeordneten Bauelementen 18 noch mit einer Abdeckkappe 56 überdeckt. Die flexible Leiterfolie 26 liegt überwiegend außerhalb des Motors 1 und greift nur mit den Enden des Chipträgerabschnitts 34 und des Statorabschnitts 36 durch entsprechende Öffnungen in den Motor 1 ein. Die übrigen Abschnitte, so auch der Verbindungsabschnitt 38 und der Anschlussabschnitt 52, liegen außerhalb des Motors 1.

Bei der dargestellten und realisierten Ausführungsform des Kleinstmotors 1 beträgt der Außendurchmesser D_{A} = 5 mm. Der Sensorchip 20 hat hierbei eine Flächengröße von 2 mm · 2,8 mm. Der Außendurchmesser D_{R} des Magnetrotors 4 beträgt D_{R} = 2,4 mm, wobei der Durchmesser D_{T} des Sensor-Teilkreises 24 D_{T} = 2 mm beträgt. Das Rückschlusselement 6 weist einen Innendurchmesser D_{I} von 4 mm auf. Der Abstand A gemäß Fig. 1 zwischen dem Sensorchip 20 und dem Magnetrotor 4 beträgt im Nominalmaß 2,47 mm. Natürlich ist die Erfindung nicht auf diese konkreten Maße beschränkt.

## Patentansprüche

1. Elektrischer Kleinstmotor (1) mit einem Außendurchmesser (D_{A}) kleiner/gleich 6 mm, bestehend aus einem hohlzylindrischen Stator (2) mit Statorwicklungen (8) und einem in dem Stator (2) mittels einer Rotorwelle (10) um eine Drehachse (16) drehbar angeordneten Permanent-Magnetrotor (4), wobei der Stator (2) ein hohlzylindrisches Rückschlusselement (6) aus einem weichmagnetischen Werkstoff aufweist, und wobei die Rotorwelle (10) in Drehlagern (12, 14) drehbar geführt ist, so dass über die Rotorwelle (10) der Magnetrotor (4) um eine Drehachse (16) drehbar innerhalb des Stators (2) angeordnet ist, und wobei die Statorwicklungen (8) zum Erzeugen eines magnetischen Drehfeldes in Abhängigkeit von der Drehstellung des Magnetrotors (4) ansteuerbar sind und zur Erfassung der Drehstellung des Magnetrotors (4) ein Sensorelemente aufweisender Sensorchip (20) derart in einem sich axial an den Magnetrotors (4) anschließenden Bereich in einer zur Drehachse (16) senkrechten Ebene liegend angeordnet ist, dass der Sensorchip (20) von dem Magnetfeld des Magnetrotors (4) so beaufschlagt wird, dass das Magnetfeld zur Feststellung der Rotor-Drehstellung auswertbar ist,
**dadurch gekennzeichnet, dass** der Sensorchip (20) als einheitlicher Sensorchip als Single-Chipencoder ausgebildet ist, der mindestens drei integrierte Magnetfeldsensoren (22) aufweist, der zusätzlich zu den Magnetfeldsensoren (22) eine derartige Signalauswertung enthält, dass er unmittelbar ein absolutes und/oder inkrementelles Drehstellungssignal für eine externe Steuerelektronik liefert, und der Sensorchip (20) in einem sich axial an eine Stirnseite des Magnetrotors (4) anschließenden Bereich konzentrisch zur Drehachse (16) angeordnet ist und die Magnetfeldsensoren (22) in einem die axiale Projektion des Magnetrotors (4) überdeckenden Bereich und in einer bestimmten Umfangsverteilung auf einem Teilkreis (24) um die Drehachse (16) angeordnet sind, wobei der Teilkreis (24) einen Durchmesser (D_{T}) aufweist, der im Bereich zwischen dem Durchmesser (D_{W}) der Rotorwelle (10) und dem Außendurchmesser (D_{A}) des Magnetrotors (4) liegt und der Sensorchip (20) von der benachbarten Stirnseite des Magnetrotors (4) über einen axialen Abstand (A) beabstandet ist, der maximal dem 1- bis 1,5-fachen Durchmesser (D_{T}) des Teilkreises (24) der Magnetfeldsensoren (22) entspricht, so dass ein Magnetfeld des Magnetrotors (4) mehrere Bauteile durchdringt, bis es in den Bereich des Sensorchips (20) gelangt.

2. Elektrischer Kleinstmotor nach Anspruch 1,
**dadurch gekennzeichnet, dass** der Sensorchip (20) vier Magnetfeldsensoren (22) enthält, die auf dem Teilkreis (24) gleichmäßig verteilt jeweils um 90° gegeneinander versetzt angeordnet sind.

3. Elektrischer Kleinstmotor nach Anspruch 1 oder 2,
**dadurch gekennzeichnet, dass** der Sensorchip (20) in Flip-Chip-Technologie ausgeführt ist und über eine flexible Leiterfolie (26) elektrisch angeschlossen ist.

4. Elektrischer Kleinstmotor nach einem der Ansprüche 1 bis 3,
**dadurch gekennzeichnet, dass** der Sensorchip (20) relativ zu dem Stator (2) und dem Magnetrotor (4) mechanisch exakt positioniert ist.

5. Elektrischer Kleinstmotor nach Anspruch 4,
**dadurch gekennzeichnet, dass** der Stator (2) einseitig mit einem flanschartigen Aufnahmeteil (28) verbunden ist, wobei das Aufnahmeteil (28) eine zur Drehachse (16) senkrechte Wandung (30) mit einer Aufnahmeöffnung (32) zur spielfrei positionierten Aufnahme des Sensorchips (20) aufweist.

6. Elektrischer Kleinstmotor nach einem der Ansprüche 3 bis 5,
**dadurch gekennzeichnet, dass** die flexible Leiterfolie (26) einen mit dem Sensorchip (20) verbundenen Chipträgerabschnitt (34) und einen elektrisch mit den Statorwicklungen (8) verbundenen Statorabschnitt (36) aufweist, wobei der Chipträgerabschnitt (34) und der Statorabschnitt (36) in zwei axial parallel versetzten Ebenen angeordnet und über einen umgefalteten Verbindungsabschnitt (38) miteinander verbunden sind.

7. Elektrischer Kleinstmotor nach Anspruch 6,
**dadurch gekennzeichnet, dass** der Statorabschnitt (36) der Leiterfolie (26) an einem Lagerschild (40) des Stators (2) befestigt ist, wobei Wicklungsanzapfungen (44) der Statorwicklungen (8) angelötet sind.

8. Elektrischer Kleinstmotor nach einem der Ansprüche 3 bis 7,
**dadurch gekennzeichnet, dass** die flexible Leiterfolie (26) einen Anschlussabschnitt (52) zum externen elektrischen Motoranschluss aufweist.

9. Elektrischer Kleinstmotor nach einem der Ansprüche 1 bis 8,
**dadurch gekennzeichnet, dass** der Magnetrotor (4) innerhalb des Stators (2) relativ zu den Statorwicklungen (8) in axialer Richtung außermittig in Richtung des Sensorchips (20) versetzt angeordnet ist.

## Claims

1. A miniature electric motor (1) with an outer diameter (D_{A}) that is smaller than/equal to 6 mm, consisting of a hollow cylindrical stator (2) with stator coils (8) and a permanent magnetic rotor (4) arranged so as to be able to rotate around a rotational axis (16) in the stator (2) by means of a rotor shaft (10), wherein the stator (2) has a hollow-cylindrical return path element (6) of a soft-magnetic material, and wherein the rotor shaft (10) is rotatably guided in rotary bearings (12, 14), so that by way of the rotor shaft (10) the magnetic rotor (4) is arranged so as to rotate around a rotational axis (16) within the stator (2), and wherein the stator coils (8) can be actuated in order to generate a magnetic rotational field in dependence upon the rotational position of the magnetic rotor (4) and a sensor chip (20) - comprising sensor elements - is arranged in such a manner in an area axially adjacent to the magnetic rotor (4) located within a plane that is vertical to the rotational axis (16), for the purpose of detecting the rotational position of the magnetic rotor (4), that the sensor chip (20) is impinged in such a way by the magnetic field of the magnetic rotor (4) that the magnetic field can be evaluated in order to determine the rotational position of the rotor,
**characterized in that** the sensor chip (20) is configured as a uniform sensor chip as a single chip encoder, which has at least three integrated magnetic field sensors (22), which contains a signal evaluation, in addition to the magnetic field sensors (22), which is such that it directly delivers an absolute and/or incremental rotational position signal for an external electronic control system, and the sensor chip (20) is arranged in an area axially adjacent to a front face of the magnetic rotor (4) concentrically with respect to the rotational axis (16) and the magnetic field sensors (22) are arranged in an area that covers the axial projection of the magnetic rotor (4) and in a specific peripheral distribution over a reference circle (24) around the rotational axis (16), wherein the reference circle (24) has a diameter (D_{T}), which is located in the area between the diameter (D_{W}) of the rotor shaft (10) and the outer diameter (D_{A}) of the magnetic rotor (4) and the sensor chip (20) is spaced from the adjacent front face of the magnetic rotor (4) via an axial gap (A), which corresponds to a maximum of 1 to 1.5 times the diameter (D_{T}) of the reference circle (24) of the magnetic field sensors (22), so that a magnetic field of the magnetic rotor (4) forming a rotational field passes through a plurality of components, until it enters the region of the sensor chip (20).

2. The electric miniature motor of claim 1,
**characterized in that** the sensor chip (20) comprises four magnetic field sensors (22), which are evenly distributed over the reference circle (24) and are mutually offset by 90° respectively, with respect to each other.

3. The electric miniature motor of claim 1 or 2,
**characterized in that** the sensor chip (20) is configured according to flip chip technology and is electrically connected via a flexible conductor foil (26).

4. The electric miniature motor of one of the claims 1 to 3,
**characterized in that** the sensor chip (20) is mechanically exactly positioned relative to the stator (2) and the magnetic rotor (4).

5. The electric miniature motor of claim 4,
**characterized in that** the stator (2) is connected on one side to a flange-like receiver part (28), wherein the receiving part (28) has a wall (30), which is vertical with respect to the rotational axis (16) and has a receiving opening (32) for play-free positioned accommodation of the sensor chip (20).

6. The electric miniature motor of one of the claims 3 to 5,
**characterized in that** the flexible conductor foil (26) has a chip carrier section (34) connected to the sensor chip (20) and a stator section (36) electrically connected to the stator coils (8), wherein the chip carrier section (34) and the stator section (36) are arranged in two axially parallel and offset planes and are mutually connected via a folded-over connecting section (38).

7. The electric miniature motor of claim 6,
**characterized in that** the stator section (36) of the conductor foil (26) is mounted on a bearing shield (40) of the stator (2), wherein winding taps (44) of the stator coils (8) are soldered on.

8. The electric miniature motor of one of the claims 3 to 7,
**characterized in that** the flexible conductor foil (26) has a terminal section (52) for external electrical motor connection.

9. The electric miniature motor of one of the claims 1 to 8,
**characterized in that** the magnetic rotor (4) is arranged inside the stator (2) with an offset in axial direction relative to the stator coils (8) and off-center in the direction of the sensor chip (20).

## Revendications

1. Moteur électrique miniature (1) présentant un diamètre extérieur (D_{A}) inférieur à/égal à 6 mm, constitué d'un stator (2) cylindrique creux comprenant des enroulements de stator (8) et d'un rotor magnétique (4) permanent disposé dans le stator (2) de manière à pouvoir tourner autour d'un axe de rotation (16) au moyen d'un arbre de rotor (10), le stator (2) présentant un élément de reflux cylindrique creux (6) constitué d'un matériau magnétique doux, et l'arbre de rotor (10) étant guidé de manière à pouvoir tourner dans des paliers rotatifs (12, 14) de telle sorte que le rotor magnétique (4) soit disposé à l'intérieur du stator (2) de manière à pouvoir tourner autour d'un axe de rotation (16) par le biais de l'arbre de rotor (10), et dans lequel les enroulements de stator (8) servant à générer un champ magnétique rotatif peuvent être commandés en fonction de la position de rotation du rotor magnétique (4), et une puce de détection (20) contenant des éléments de détection étant disposée, aux fins de la détection de la position de rotation du rotor magnétique (4), de manière à se trouver dans une zone adjacente axialement au rotor magnétique (4), dans un plan perpendiculaire par rapport à l'axe de rotation (16) de telle sorte que la puce de détection (20) est soumise à l'action du champ magnétique du rotor magnétique (4) de telle manière que le champ magnétique peut être analysé afin de constater la position de rotation du rotor,
**caractérisé en ce que** la puce de détection (20) en tant que puce de détection unitaire, est réalisée sous forme d'encodeur de puce unique, qui présente au moins trois détecteurs de champ magnétique (22) intégrés, contient en plus des détecteurs de champ magnétique (22), une analyse de signal telle qu'elle fournisse immédiatement un signal de position de rotation absolu et/ou incrémental pour une électronique de commande externe, et la puce de détection (20) est disposée dans une région se raccordant axialement à un côté frontal du rotor magnétique (4) concentriquement à l'axe de rotation (16) et les détecteurs de champ magnétique (22) sont disposés dans une zone recouvrant la projection axiale du rotor magnétique (4) et, selon une certaine répartition périphérique, sur un cercle partiel (24) autour de l'axe de rotation (16), dans lequel le cercle partiel (24) présente un diamètre (D_{T}), qui se trouve dans la plage comprise entre le diamètre (D_{W}) de l'arbre de rotor (10) et le diamètre extérieur (D_{A}) du rotor magnétique (4) et la puce de détection (20) est tenue à distance du côté frontal adjacent du rotor magnétique (4) sur une distance (A) axiale, qui correspond au maximum à 1 à 1,5 fois le diamètre (D_{T}) du cercle partiel (24) des détecteurs de champ magnétique (22), de sorte qu'un champ magnétique du rotor magnétique (4) formant un champ magnétique rotatif pénètre à travers plusieurs composants jusqu' à atteindre la zone de la puce de détection (20).

2. Moteur électrique miniature selon la revendication 1,
**caractérisé en ce que** la puce de détection (20) contient quatre détecteurs de champ magnétique (22), qui sont répartis de manière homogène sur le cercle partiel (24) en étant décalés les uns par rapport aux autres respectivement de 90°.

3. Moteur électrique miniature selon la revendication 1 ou 2,
**caractérisé en ce que** la puce de détection (20) est réalisée selon la technique des puces retournées et raccordée électriquement par l'intermédiaire d'un film conducteur (26) flexible.

4. Moteur électrique miniature selon l'une quelconque des revendications 1 à 3,
**caractérisé en ce que** la puce de détection (20) est positionnée avec précision de manière mécanique par rapport au stator (2) et au rotor magnétique (4).

5. Moteur électrique miniature selon la revendication 4,
**caractérisé en ce que** le stator (2) est relié d'un côté à une partie de réception (28) type bride, dans lequel la partie de réception (28) présente une paroi (30) perpendiculaire à l'axe de rotation (16) et dotée d'un orifice de réception (32) servant à recevoir la puce de détection (20) avec un positionnement sans jeu.

6. Moteur électrique miniature selon l'une quelconque des revendications 3 à 5,
**caractérisé en ce que** le film conducteur (26) flexible présente une section de support de puce (34) reliée à la puce de détection (20) et une section de stator (36) reliée électriquement aux enroulements de stator (8), dans lequel la section de support de puce (34) et la section de stator (36) sont disposées dans deux plans décalés de manière parallèle axialement et sont reliées l'une à l'autre à l'autre par l'intermédiaire d'une section de liaison (38) repliée.

7. Moteur électrique miniature selon la revendication 6,
**caractérisé en ce que** la section de stator (36) du film conducteur (26) est fixée à un flasque (40) du stator (2), dans lequel des prises d'enroulement (44) des enroulements de stator (8) sont brasées.

8. Moteur électrique miniature selon l'une quelconque des revendications 3 à 7,
**caractérisé en ce que** le film conducteur (26) flexible présente une section de raccordement (52) servant au raccordement électrique externe du moteur.

9. Moteur électrique miniature selon l'une quelconque des revendications 1 à 8,
**caractérisé en ce que** le rotor magnétique (4) est disposé de manière décalée en direction de la puce de détection (20) de manière excentrée dans une direction axiale à l'intérieur du stator (2) par rapport aux enroulements de stator (8).
